# EUROPEAN PATENT SPECIFICATION

(11) **EP 1 478 969 B1**
(45) Date of publication and mention of the grant of the patent: **14.03.2012**
(21) Application number: 03739597.7
(22) Date of filing: 27.01.2003
(51) Int. Cl.: G02F 1/1335

(54) **METHOD OF MANUFACTURING A LIQUID CRYSTAL DISPLAY DEVICE USING AN OPTICAL DIFFUSING REFLECTIVE CONSTRUCTION**
HERSTELLUNGSVERFAHREN FÜR FLÜSSIGKRISTALLANZEIGEEINRICHTUNG MIT OPTISCHER REFLEKTIERENDER DIFFUSORKONSTRUKTION
PROCEDE DE FABRICATION D'UN DISPOSITIF AFFICHEUR A CRISTAUX LIQUIDES A CONSTRUCTION REFLECTIVE DE DIFFUSION OPTIQUE

(30) Priority: 13.02.2002 JP 2002034887
(43) Date of publication of application: 24.11.2004
(73) Proprietor: TPO Hong Kong Holding Limited, Shatin, Hong Kong (CN)
(72) Inventor: YUKAWA, Teizo, NL-5656 AA Eindhoven (NL)
(74) Representative: Hutter, Jacobus Johannes
(86) International application number: PCT/IB2003/000242
(87) International publication number: WO 2003/069398

(56) References cited:
- EP-A- 0 265 007
- EP-A- 0 617 310
- US-A- 4 536 421

## Description

### BACKGROUND OF THE INVENTION

### 1. Field of the Invention

The present invention relates to a manufacturing method for a liquid crystal display device using a diffusing reflective construction having a function of reflecting and diffusing incident light preferably used in reflective type and transflective type liquid crystal display devices.

### 2. Description of the Related Art

A typical reflective type liquid crystal display device modulates incident light from a display screen side using a liquid crystal medium in accordance with an image to be displayed and allows the modulated light to be reflected toward the display screen side, so as to thereby display the image.

A Japanese Patent Application Laid-Open No. 273800/94 corresponding to EP-A-0 617 310 discloses a picture element (pixel) electrode having such a function of reflection. The arrangement described in this reference is intended to have many dispersed projections made of a photosensitive resin material and an organic insulating film being deposited over these projections and having a roughened surface along the distribution of these projections, and to form a metal thin film as a picture element electrode on the organic insulating film. This enables the picture element electrode to have a roughened surface and not only to reflect but also to diffuse incident light. This diffusion of light prevents an image on the display screen side from being mirrored in direct reflection and at the same time contributes to improving viewing angle characteristics. Thus, in the reference, the picture element electrode is made to have not only a function of optical reflection but also a function of optical diffusion.

However, the prior art described in the reference involves a troublesome process for forming the reflective picture element electrodes having roughened surfaces for the optical diffusion. More specifically, since this prior art is intended to form roughness on the surface of the reflective picture element electrode based on a layer of a double-structure of projections and a film deposited on these projections, it requires a manufacturing process including patterning processes using dedicated masks for the projections and the deposited film, respectively, tending to increase manufacturing cost and product cost of the liquid crystal display device using the reflective electrode manufactured according to this manufacturing process.

EP-A-0-265 007 discloses a diffuse reflector with a rippled surface, which is manufactured by methods including application of UV light and/or heat.

### SUMMARY OF THE INVENTION

The present invention has been made in view of the above-described points, and its object is to provide a method of manufacturing a liquid crystal display device comprising a reflective electrode with a roughened surface which can be formed by means of a simple process.

In order to attain the above-described objects, the liquid crystal display device of one aspect according to the present invention is a liquid crystal display device with a diffusing reflective construction having a function of optical diffusion by which incident light is reflected while being diffused, the diffusing reflective construction comprising: a basic figure layer formed on a base layer, which has a roughened surface; and an optically reflective layer formed on the basic figure layer, which presents a roughened surface along the roughened surface of the basic figure layer, the basic figure layer being formed from a radiation- or thermo-sensitive resin material whose surface is provided with roughness by means of decompression drying treatment.

According to this aspect, the basic figure layer has a roughened surface sufficient for the optical diffusion, formed by decompression drying and only the roughened surface can make foundation for the roughened surface of the optically reflective layer, whereby a construction for forming roughness in the surface of the optically reflective layer can be provided having a simple architecture. Use of such a construction leads to inexpensive manufacturing and product cost of the liquid crystal display device. Furthermore, the fact that the basic figure layer is formed from a radiation- or thermo-sensitive resin material is advantageous because irradiating the basic figure layer with appropriate radiation rays or the like through a mask or the like can easily pattern this basic figure layer as appropriate. That is, it is possible to easily implement a basic figure layer having a roughened surface, which is desirably patterned.

Accordingly, it may naturally be a liquid crystal display device characterized in that the basic figure layer is a single layer and exclusively forms foundation by which roughness is presented for a surface of the optically reflective layer.

Furthermore, the sensitive resin material may comprise a phenol novolac resin and a photosensitive material and the photosensitive material may be a naphthoquinone diazide base material. This allows the basic figure layer to be formed of materials that are plainly used, and is of practical use.

On the other hand, the optically reflective layer may function as a pixel electrode. This provides the pixel electrode not only with the original function of applying a voltage to the liquid crystal medium but also with a function of optical reflection and diffusion, and this is extremely convenient by also being combined with the above-described easy and low-cost manufacturing manner.

Furthermore, the base layer may include electrodes and/or elements for driving pixels. This makes it possible to form the above-described preferable optical diffusing reflective construction on the upper layer side of the base layer having a construction for driving pixels and is convenient for a configuration wherein the structure for driving pixels is masked by the pixel electrodes based on the diffusing reflective construction, in particular for reflective type and transflective type liquid crystal display devices, etc.

In order to achieve the above-described objects, a method of manufacturing a liquid crystal display device according to the present invention is a method of manufacturing a liquid crystal display device comprising a diffusing reflective construction having a function of optical diffusion by which incident light is reflected while being diffused, which comprises a basic resin deposition step of depositing a radiation- or thermo-sensitive resin material on a base layer, a vacuum drying step of subjecting the deposited sensitive resin material in a viscous state to a decompression drying treatment to provide a surface of the resin material with roughness, a shape setting step of stabilizing the sensitive resin material having resulted after the decompression drying treatment to form a basic figure layer and a reflective layer forming step of depositing an optically reflective material on the basic figure layer to form an optically reflective layer having a roughened surface that is defined along the roughened surface of the basic figure layer.

According to this aspect, no mask for the basic figure layer is required to form roughness in the basic figure layer and it is possible to proceed to the step of forming an optically reflective layer immediately after the basic resin deposition step, whereby the manufacturing process is simplified.

According to this aspect, the shape setting step may comprise a patterning step of patterning the layer of the sensitive resin material, the patterning step including: a step of irradiating the sensitive resin material with radiation rays through a mask having a predetermined mask pattern; and a step of subsequently removing an unnecessary portion of the sensitive resin material. This allows the layer of the radiation- or thermo-sensitive resin material (basic figure layer) to be desirably patterned in accordance with the liquid crystal display device applied as appropriate.

Furthermore, the decompression drying treatment may be executed for the deposited sensitive resin material under 120 degrees Celsius or less. Accordingly, there is no need for any special heating or high temperature retaining system that would cause an increase of a manufacturing cost, and in particular since it can roughen the surface of the basic figure layer at a condition without heating, e.g. at a room temperature, it is free of complexity involved in temperature control as in the case of the above-described prior art and contributes to a reduction of the manufacturing cost.

Also in this aspect, the basic figure layer may be a single layer and exclusively form foundation by which roughness is presented for a surface of the optically reflective layer, the sensitive resin material may comprise a phenol novolac resin and a photosensitive material, the photosensitive material may be a naphthoquinone diazide base material, the optically reflective layer may function as a pixel electrode, or the base layer may include electrodes and/or elements for driving pixels. These can also contribute to the same advantages as those in the previously mentioned aspect.

### BRIEF DESCRIPTION OF THE DRAWINGS

Fig. 1 is a flowchart showing a manufacturing method for a liquid crystal display device according to a first embodiment of the present invention.
Fig. 2 is a flowchart showing a manufacturing method for the liquid crystal display device, following the flowchart of Fig. 1.
Fig. 3 is a schematic cross-sectional view of a part of a substrate incorporated with a reflective electrode on a TFT composite layer forming stage in a manufacturing method for the liquid crystal display device according to the first embodiment of the invention.
Fig. 4 is a schematic cross-sectional view of a part of a substrate incorporated with a reflective electrode on an insulating material deposition stage in a manufacturing method for the liquid crystal display device according to the first embodiment of the invention.
Fig. 5 is a schematic cross-sectional view of a part of a substrate incorporated with a reflective electrode after a vacuum bake treatment stage in a manufacturing method for the liquid crystal display device according to the first embodiment of the invention.
Fig. 6 is a schematic cross-sectional view of a part of a substrate incorporated with a reflective electrode after an insulating film patterning stage in a manufacturing method for the liquid crystal display device according to the first embodiment of the invention.
Fig. 7 is a schematic cross-sectional view of a part of a substrate incorporated with a reflective electrode on the way of a reflective electrode patterning process in a manufacturing method for the liquid crystal display device according to the first embodiment of the invention.
Fig. 8 is a schematic cross-sectional view of a part of a substrate incorporated with a reflective electrode after the reflective electrode patterning process in a manufacturing method for the liquid crystal display device according to the first embodiment of the invention.
Fig. 9 is a schematic cross-sectional view of a part of a substrate incorporated with a reflective electrode in a manufacturing method for the liquid crystal display device according to a second embodiment of the invention.

### DESCRIPTION OF THE PREFERRED EMBODIMENT

Now, the above-described aspects and other implementations of the present invention will be hereinbelow described in more detail with reference to the accompanying drawings.

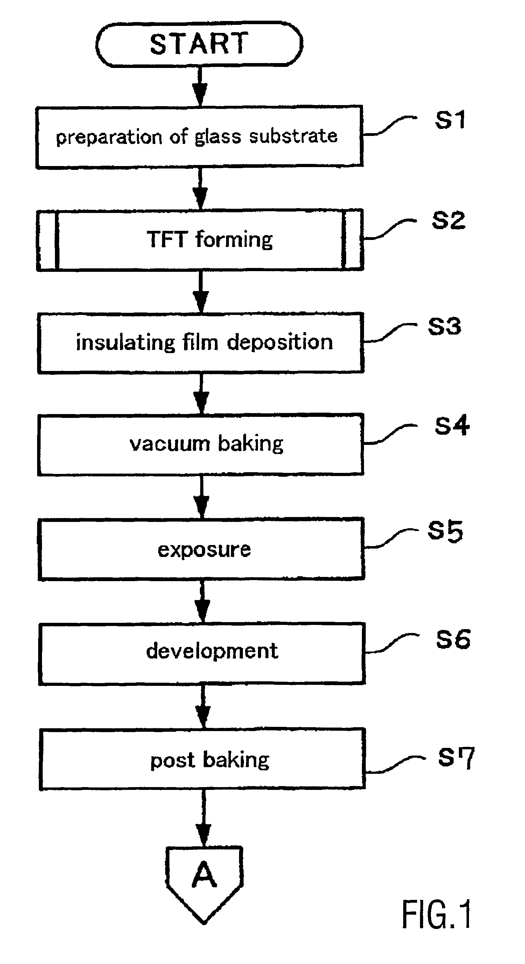

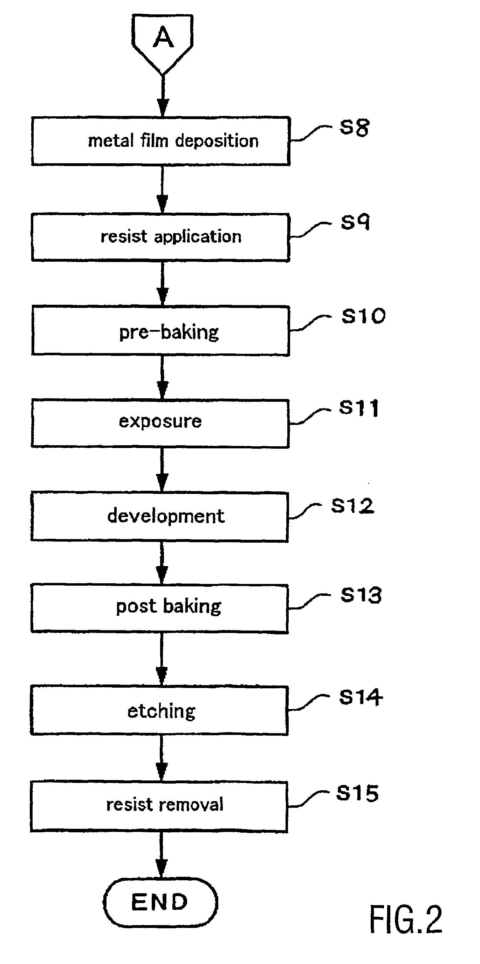

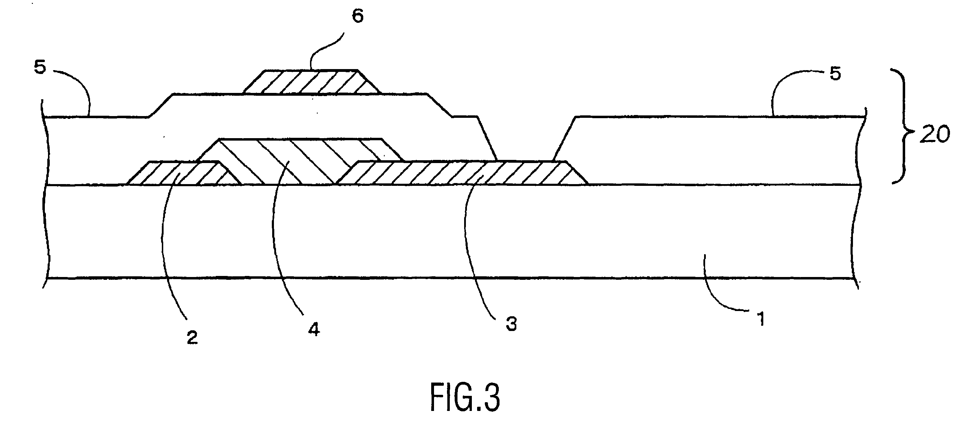

Figs. 1 and 2 show a method of manufacturing a substrate incorporated with reflective electrodes of an active type reflective liquid crystal display device of one embodiment according to the present invention, and Figs. 3 to 8 schematically show cross-sectional views of a part of the substrate in each step of the manufacturing flow thereof.

In Fig. 1, first of all, a glass substrate 1 is prepared as a supporting substrate or base layer (step S1), and a TFT (thin-film transistor) is formed on the upper surface of the glass substrate 1 (step S2). Fig. 3 shows the structure of the assembly substrate in this stage.

That is, a source electrode 2 and a drain electrode 3 are formed in their predetermined shapes and positions on the upper surface of the glass substrate 1, and on the upside a semiconductor layer (channel forming layer) 4 made of amorphous silicon a-Si is formed in such a way that the semiconductor layer 4 are in contact with and make a bridge between these electrodes. Then, on the upper surface of the source electrode 2, drain electrode 3 and semiconductor layer 4, an insulating film 5 is stacked. After the insulating film 5 is patterned, a gate electrode 6 is formed on the upper surface of the insulating film 5 at the position corresponding to the semiconductor layer 4. The insulating film 5 serves as a gate insulating film intervening between the semiconductor layer 4 and the gate electrode 6. In this way, a TFT composite layer 20 having a top gate structure is formed on the glass substrate 1.

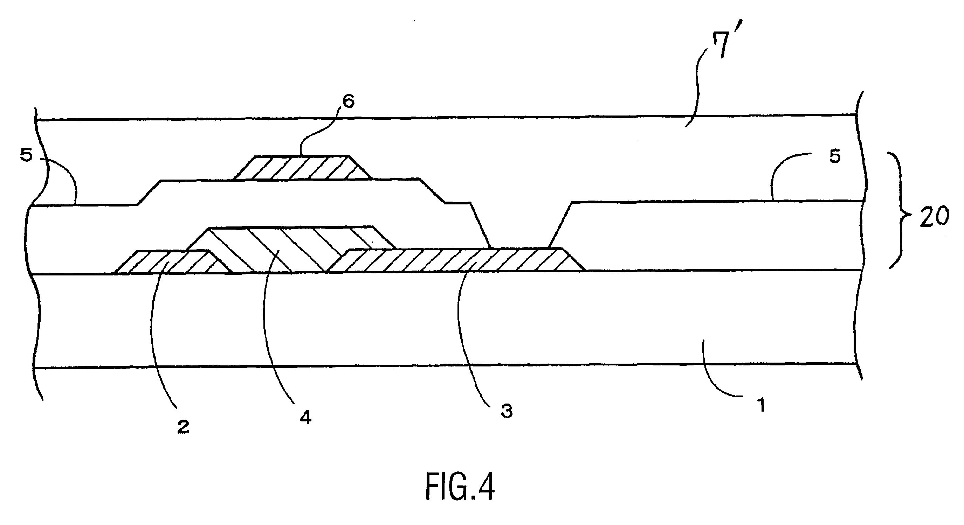

Then, an organic insulating material for optical diffusion is applied to the upper surface of the TFT composite layer 20 by means of, for example, spin coating and an insulating film is formed over (foundational resin material deposition step S3). This insulating material consists of a mixture of: an electric insulating substance which is a kind of photosensitive resin, for example, phenol novolac resin; and an additive photosensitive material such as naphthoquinone diazide. The insulating film in the structure on this stage is shown in Fig. 4 as a layer 7' that extends over the principal plane of the composite layer 20.

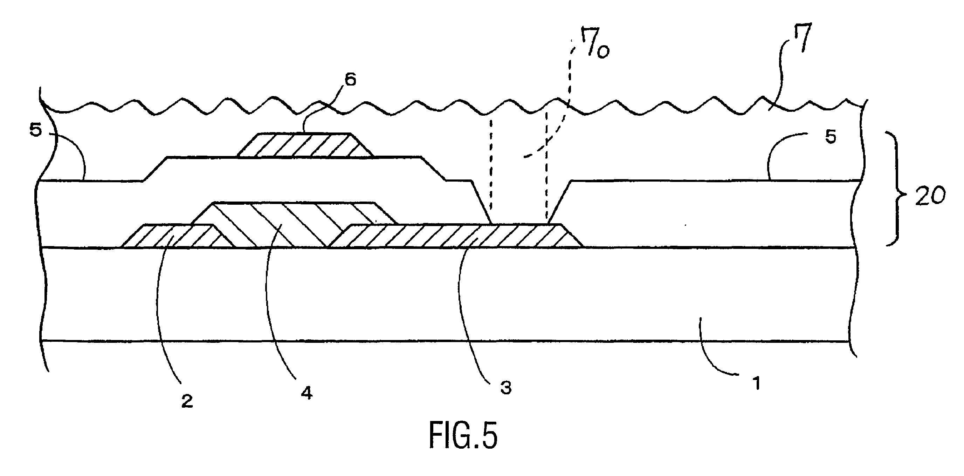

After that, this insulating film 7' is subjected to vacuum- or decompression-drying (vacuum drying step S4). More specifically, the insulating film 7' is not unhardened but in a viscous state immediately after it is stacked on the composite layer 20, wherefore the substrate 1 carrying the insulating film 7' in this state is placed in a hermetically sealed chamber keeping an atmosphere at a room temperature of 80 degrees Celsius or less (e.g., 5 to 35 degrees Celsius) or a normal temperature, and thereafter a process of exhausting the filling gas from the chamber and evacuating the chamber to a high degree of vacuum (vacuum bake) is carried out. Such vacuum bake causes the insulating film 7' that has been generally flat to have a roughened surface like wrinkles as shown in Fig. 5.

In practice, a positive photo/UV resist "AZ-1350J" provided by Shipley Inc. was used as a material of the organic insulating film 7 and this AZ-1350J was dripped on the TFT composite layer 20, spin-coated at approximately 3500 rpm for approximately 30 seconds, and then the spin-coated substrate was housed in the chamber and subjected to a process of continuously reducing the air pressure in the chamber at a room temperature (around 20 degrees Celsius) for 10 minutes or longer. As a result, it has been confirmed that satisfactory roughness can be formed in the surface of the insulating film 7'.

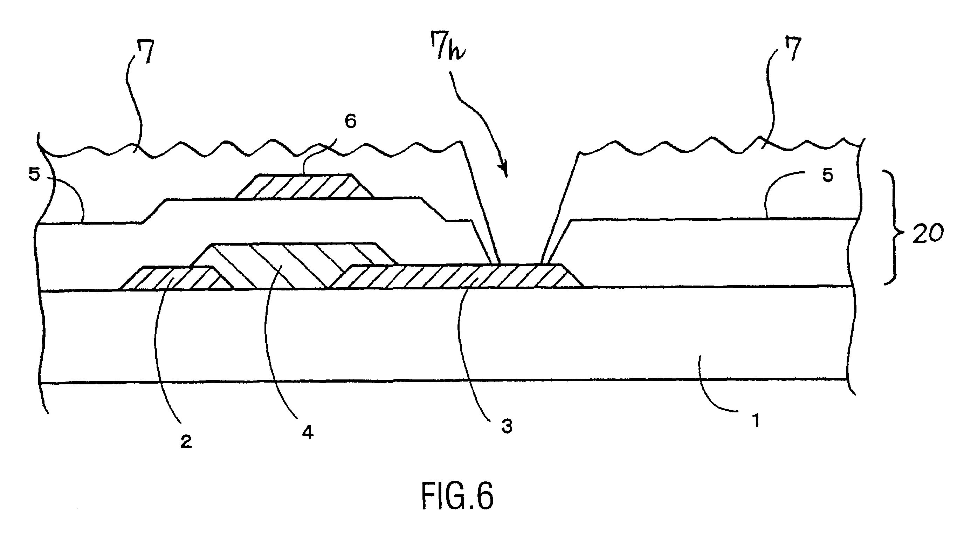

The insulating film 7 as a basic figure layer with a roughened surface formed in this way is exposed to light through a mask (not shown) placed on the upper surface of the film 7 (step S5). This mask is intended to form a contact hole 7h shown in Fig. 6 and has such a mask pattern that only a portion 7o corresponding to the hole 7h can be irradiated with light.

Then, the insulating film 7 having been subjected to this exposure process is developed (step S6). Since the insulating film 7 is made of the above-described photosensitive resin and only the portion 7o having been irradiated with light is changed in its nature to a substance soluble in developing fluid, the insulating film 7 is locally removed through this development process in such a way that the contact hole 7h is created. Thus, the insulating film 7 is patterned in such a way as to have an opening to expose part of the drain electrode 3 as shown in Fig. 6. By the way, the above-described step S5 belongs to a step of irradiating the insulating film 7 with radiation rays, the step S6 belongs to a step of removing the insulating film 7 and both of these steps belong to a patterning step.

Then, post bake is conducted to fully harden or stabilize the insulating film 7 (step S7). Here, the substrate assembly is placed in an atmosphere at about 80 degrees to 130 degrees Celsius, (120 degrees Celsius in this example) to be baked. In this way, the hardened insulating film 7 is formed, which has a roughened, wrinkled surface and a contact hole for the drain electrode 3. By the way, the step S7 together with the steps S5 and S6 is included in the shape setting step of the basic figure layer or the insulating film 7.

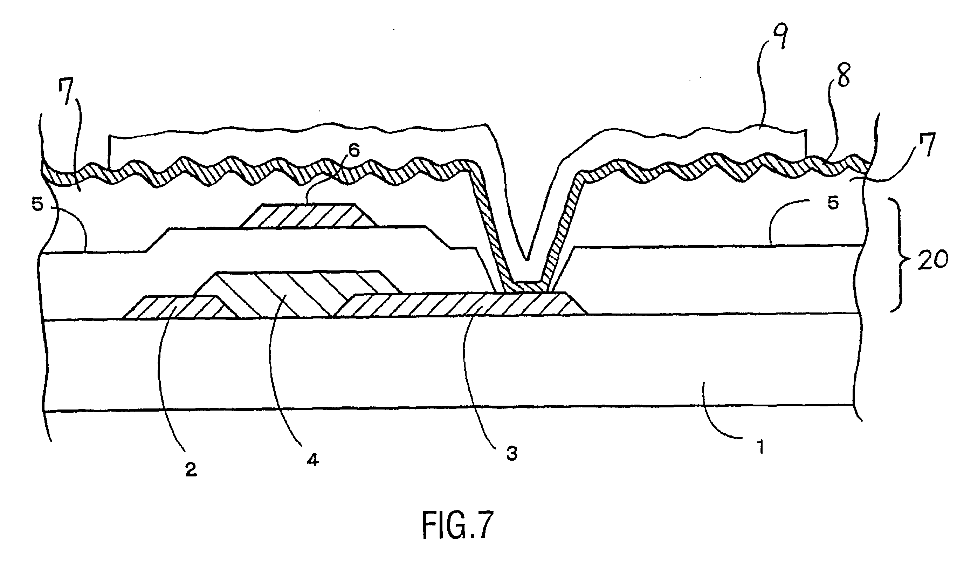

After the insulating film 7 is formed, a metallic optically-reflective material (aluminum in this example) for the reflective electrode 8 as an optically reflective layer is stacked over the entire area of the insulating film 7 by means of sputtering (step S8). And, a resist is applied to the upper surface of the metallic material film (step S9) and prebaking is carried out (step S10). Then, the resist film is subjected to an exposure process by irradiating it with light using a second mask (step S 11), and developed to remove the unnecessary resist portion (step S12). In this stage, as shown in Fig. 7, the metallic film 8 extends along the roughened surface of the insulating film 7 over the entire area of the substrate assembly and the resist portion 9 which has been patterned by the second mask and remains after development is deposited in a predetermined location and area on the metallic film 8.

After that, post baking is carried out to stabilize the resist portion 9 (step S 13) and etching is carried out to remove unnecessary portions of the metallic film 8 on which the resist portion 9 is not deposited (step S 14). Then, a process of peeling off the remaining resist portion 9 is carried out (step S 15).

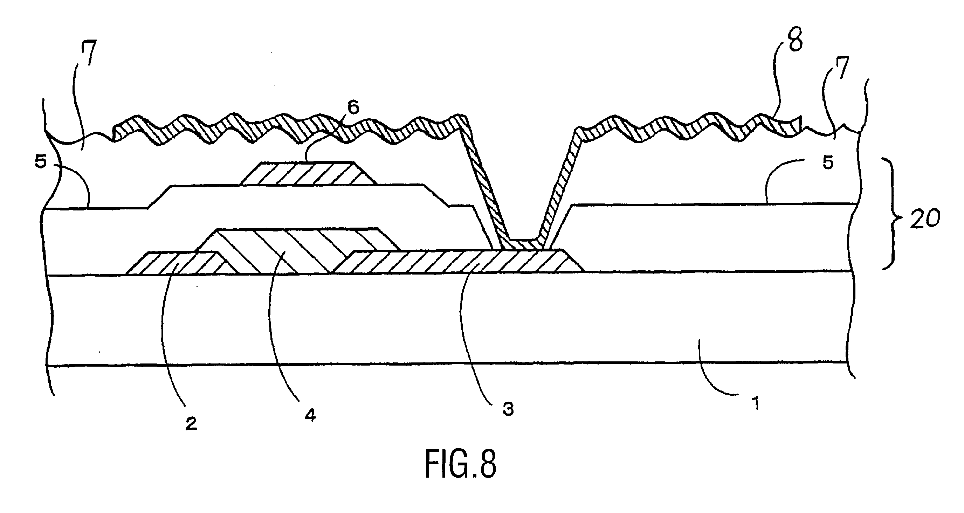

As a result, as shown in Fig. 8, the reflective electrode 8 having a roughened surface for diffusedly reflecting incident light and an area functioning as the pixel electrode is formed. It is noted that the finally obtained reflective electrode 8 has a shape as the pixel electrode having an independent area for each pixel. Such a shape is based on the mask pattern of the above-described second mask. The steps S8 to S15 correspond to a step of forming a reflective layer.

After the step S15, the process further goes to a predetermined step in the process of manufacturing the liquid crystal display device.

As described above, according to this embodiment, roughness is formed in the surface of the reflective film 8 using only the insulating film 7 of a single layer which has roughness on its own surface and which is formed on the upper surface of the TFT composite layer 20, and therefore only one mask (basically, a mask for forming a contact hole) is required for the single insulating film, compared to the aforementioned prior art, so that it is possible to form a reflective film having an optical diffusion characteristic with a simple configuration. Moreover, it is possible to easily form a roughened surface suitable for the desired optical diffusion for such a single-layer insulating film by means of vacuum drying as described above. This makes, therefore, it possible to manufacture a diffusing reflective film at a low cost and contribute to a reduction of the manufacturing cost of a liquid crystal display device using it and its product cost.

Of course, since the roughened reflective electrode formed in this way offers the effect of diffused reflection of incident light which is its fundamental function, it does not lose the aforementioned advantages of contributing to a reduction of mirror reflection and improvement of characteristics of the angle of visibility and implementing a liquid crystal display device with excellent visual characteristics.

It is also advantageous that the above-described low-cost material can be used for the insulating film 7 for diffusion.

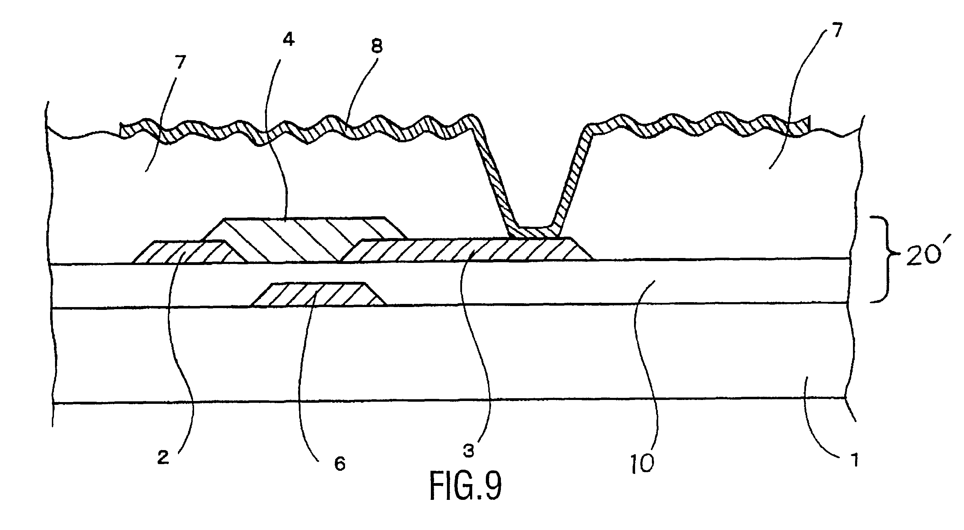

In the above-described Embodiment 1 there has been described the substrate incorporated with a reflective electrode for the liquid crystal display device having a top gate structure, but the present invention is also applicable to a liquid crystal display device having a bottom gate structure. A substrate incorporated with a reflective electrode of such a bottom gate type is shown in Fig. 9.

In this embodiment, a gate electrode 6 is formed on the upper surface of a glass substrate 1, and an insulating film 10 is formed on the upper surface of the gate electrode 6 and the upper surface of the glass substrate 1 excluding the area corresponding to the gate electrode 6. Then, a source electrode 2, a drain electrode 3 and a semiconductor layer (channel forming layer) 4 made of amorphous silicon a-Si are formed on the upper surface of the insulating film 10. Here, the insulating film 10 serves as a gate insulating film. In this way, a TFT composite layer 20' is formed, including the source electrode 2, drain electrode 3, semiconductor layer 4, gate electrode 6 and insulating film 10.

On the upper layer side of this TFT composite layer 20', the similar process to that in the steps of Embodiment 1, and the equivalent insulating film 7 for diffusion and the equivalent reflective electrode 8 are formed.

The same advantages as those of Embodiment 1 can also be expected from this bottom gate type liquid crystal display device.

Although the active type liquid crystal display device has been described in the above embodiments, but the present invention is also applicable to a passive type liquid crystal display device. It goes without saying that, for the insulating film 7, it is also possible to use a material that allows a roughened surface providing a satisfactory optical diffusion effect to be formed by means of a vacuum drying treatment instead of the above-described specific materials.

Furthermore, the above-described embodiments are directed to the case where a vacuum drying treatment is performed at a room temperature, but the method according to the present invention is not necessarily limited to a room temperature. However, it is an advantage of the present invention that the surface of the basic figure layer can be roughened even at a temperature.

Furthermore, the above-described embodiments are directed to the liquid crystal display device using TFTs as pixel drive active elements, but the present invention is not limited to a TFT and is also applicable to a liquid crystal display device using other types of active elements.

Furthermore, the pixel electrode is an optically reflective layer having an optical diffusion characteristic in the above description, but the present invention is not limited to such examples. The highest-ranked concept of technical idea according to the present invention may also cover a mode in which an optically reflective layer having an optical diffusion characteristic is formed aside from this pixel electrode. In the case of this mode, the optically reflective layer is not limited to the one formed of an electrically conductive substance.

As an additional note, the material used for the above-described insulating film 7 is not limited to the one having photosensitivity, but other radiation- or thermo-sensitive materials can also be used for it. For example, the aforementioned "AZ-1350J," or the like is made soluble by irradiation with ultraviolet rays so that it can be patterned. Moreover, a material of the insulating film 7 is not limited to a material that allows the above-described patterning based on a development process. For some passive type liquid crystal display device, etc., there may be a mode in which the material is applied to only the necessary figure portion through a so-called printing process. In such a case, all that is required is to be able to finally harden or stabilize the material for the basic figure layer using certain radiation rays or heat transfer means.

In addition, the explanations hitherto are directed to the structure of the substrate assembly in a simplified form for the sake of clarity in describing essence of the present invention, but these do not exclude possibilities of minor modifications or additions of the components and other components and variants of technical features within the scope of the claims

Thus, the preferred embodiments described herein are only illustrative and not restrictive. The scope of the present invention includes all modifications residing within the definition of the claims.

## Claims

1. A method of manufacturing a liquid crystal display device comprising a diffusing reflective construction (7,8) having a function of optical diffusion by which incident light is reflected while being diffused, which comprises:
a basic resin deposition step of depositing a radiation- or heat-sensitive resin material (7') on a base layer (1,20),;
a vacuum drying step of subjecting the deposited sensitive resin material (7') in a viscous state to decompression drying treatment to provide a surface of the resin material (7') with roughness;
a shape setting step of stabilizing the sensitive resin material having resulted after the decompression drying treatment to form a basic figure layer (7); and
a reflective layer forming step of depositing an optically reflective material on the basic figure layer (7) to form an optically reflective layer (8) having a roughened surface that is defined along the roughened surface of the basic figure layer (7).

2. A method according to Claim 1, **characterized in that** the shape setting step comprises a patterning step of patterning the layer of the sensitive resin material (7'), the patterning step including:
a step of irradiating the sensitive resin material (7') with radiation rays through a mask having a predetermined mask pattern; and
a step of subsequently removing an unnecessary portion of the sensitive resin material (7').

3. A method according to Claim 1 or 2, **characterized in that** the decompression drying treatment is executed for the deposited sensitive resin material (7') under 120 degrees Celsius or less.

4. A method according to Claim 1, 2 or 3, **characterized in that** the basic figure layer (7) is a single layer and exclusively forms foundation by which roughness is presented for a surface of the optically reflective layer (8).

5. A method according to Claim 1, 2, 3 or 4, **characterized in that** the sensitive resin material (7') comprise a phenol novolac resin and a photosensitive material.

6. A method according to Claim 5, **characterized in that** the photosensitive material is a naphthoquinone diazide base material.

7. A method according to Claim 1 - 6, **characterized in that** the optically reflective layer (8) functions as a pixel electrode.

8. A method according to Claim 1 - 7, **characterized in that** the base layer (1,20) includes electrodes and/or elements for driving pixels

## Patentansprüche

1. Verfahren zur Herstellung einer Flüssigkristall-Anzeigevorrichtung umfassend eine streuende reflektierende Konstruktion (7, 8), die eine optische Diffusionsfunktion aufweist, wodurch einfallendes Licht reflektiert wird, während es gestreut wird, welches umfasst:
einen Grundharz-Abscheidungsschritt der Abscheidung eines strahlungs- oder wärmeempfindlichen Harzmaterials (7') auf eine Grundschicht (1, 20);
einen Vakuumtrocknungsschritt, bei dem das abgeschiedene empfindliche Harzmaterial (7') in einem viskosen Zustand einer Dekompressionstrocknungsbehandlung unterworfen wird, um eine Oberfläche des Harzmaterials (7') mit Rauheit bereitzustellen;
einen Formgebungsschritt der Stabilisierung des empfindlichen Harzmaterials, das sich nach der Dekompressionstrocknungsbehandlung ergeben hat, um eine Grundformschicht (7) zu bilden; und
einen Reflexionsschicht-Bildungsschritt der Abscheidung eines optisch reflektierenden Materials auf die Grundformschicht (7), um eine optisch reflektierende Schicht (8) mit einer gerauten Oberfläche zu bilden, die entlang der gerauten Oberfläche der Grundformschicht (7) definiert ist.

2. Verfahren nach Anspruch 1, **dadurch gekennzeichnet, dass** der Formgebungsschritt einen Strukturierungsschritt der Strukturierung der Schicht des empfindlichen Harzmaterials (7') umfasst, wobei der Strukturierungsschritt:
einen Schritt der Bestrahlung des empfindlichen Harzmaterials (7') mit Strahlen durch eine Maske mit einem vorbestimmten Maskenmuster; und
einen Schritt des anschließenden Entfernens eines nicht benötigten Teils des empfindlichen Harzmaterials (7') beinhaltet.

3. Verfahren nach Anspruch 1 oder 2, **dadurch gekennzeichnet, dass** die Dekompressionstrocknungsbehandlung für das abgeschiedene empfindliche Harzmaterial (7') bei 120° Celsius oder weniger ausgeführt wird.

4. Verfahren nach Anspruch 1, 2 oder 3, **dadurch gekennzeichnet, dass** die Grundformschicht (7) eine Einzelschicht ist und ausschließlich die Grundlage bildet, durch die Rauhigkeit für eine Oberfläche der optisch reflektierenden Schicht (8) dargestellt wird.

5. Verfahren nach Anspruch 1, 2, 3 oder 4, **dadurch gekennzeichnet, dass** das empfindliche Harzmaterial (7') ein Phenol-Novolak-Harz und ein lichtempfindliches Material umfasst.

6. Verfahren nach Anspruch 5, **dadurch gekennzeichnet, dass** das lichtempfindliche Material ein Material auf Naphthochinondiazidbasis ist.

7. Verfahren nach den Ansprüchen 1 bis 6, **dadurch gekennzeichnet, dass** die optisch reflektierende Schicht (8) als eine Pixelelektrode fungiert.

8. Verfahren nach den Ansprüchen 1 bis 7, **dadurch gekennzeichnet, dass** die Grundschicht (1, 20) Elektroden und/oder Elemente zum Ansteuern von Pixeln beinhaltet.

## Revendications

1. Méthode de fabrication d'un dispositif d'affichage à cristaux liquides comprenant une construction réfléchissante diffusante (7, 8) ayant une fonction de diffusion optique par laquelle la lumière incidente est réfléchie, tout en étant diffusée, qui comprend :
une étape de dépôt de résine de base en déposant un matériau de résine sensible aux radiations ou à la chaleur (7') sur une couche de base (1, 20) ;
une étape de séchage sous vide en soumettant le matériau de résine sensible déposé (7') dans un état visqueux à un traitement de séchage par décompression pour former une surface rugueuse du matériau de résine (7') ;
une étape de mise en forme en stabilisant le matériau de résine sensible résultant après le traitement de séchage par décompression pour former une couche de forme de base (7) ; et
une étape de formation d'une couche réflective en déposant un matériau optiquement réfléchissant sur la couche de forme de base (7) pour former une couche optiquement réfléchissante (8) ayant une surface rugueuse définie le long de la surface rugueuse de la couche de forme de base (7).

2. Méthode selon la revendication 1, **caractérisée par le fait que** l'étape de mise en forme comprend une étape de structuration en structurant la couche de matériau de résine sensible (7'), l'étape de structuration comprenant :
une étape d'irradiation du matériau de résine sensible (7') avec des rayons de radiation à travers un cache ayant un motif de cache prédéterminé ; et
une étape pour retirer subséquemment une partie superflue du matériau de résine sensible (7').

3. Méthode selon les revendications 1 et 2, **caractérisée par le fait que** le traitement de séchage par décompression est réalisé pour le matériau de résine sensible déposée (7') à une température de 120 degrés Celsius ou moins.

4. Méthode selon les revendications 1, 2 ou 3, **caractérisée par le fait que** la couche de forme de base (7) est une couche unique et forme exclusivement la fondation par laquelle la rugosité est présentée pour une surface de la couche optiquement réfléchissante (8).

5. Méthode selon les revendications 1, 2, 3 ou 4, **caractérisée par le fait que** le matériau de résine sensible (7') comprend une résine phénol novolaque et un matériau photosensible.

6. Méthode selon la revendication 5, **caractérisée par le fait que** le matériau photosensible est un matériau de base diazonaphthoquinone.

7. Méthode selon les revendications 1 à 6, **caractérisée par le fait que** la couche optiquement réfléchissante (8) fonctionne en tant qu'électrode de pixel.

8. Méthode selon les revendications 1 à 7, **caractérisée par le fait que** la couche de base (1, 20) inclut des électrodes et/ou des éléments pour commander les pixels.
